Europäisches Patentamt

(19) European Patent Office

Office européen des brevets

(11) Publication number : **0 457 549 A1**

# (12) EUROPEAN PATENT APPLICATION

(21) Application number : **91304316.2**

(22) Date of filing : **14.05.91**

(51) Int. Cl.⁵ : **C08K 5/3492, C08L 77/00, C08F 267/10**

(30) Priority : **14.05.90 US 523073**
**23.07.90 US 555612**

(43) Date of publication of application :
**21.11.91 Bulletin 91/47**

(84) Designated Contracting States :
**AT BE CH DE DK ES FR GB GR IT LI LU NL SE**

(71) Applicant : **MELAMINE CHEMICALS, INC.**
**River Road, Highway No 18**
**Donaldsonville, Louisiana 70346 (US)**

(72) Inventor : **Moore, William Percy**
**408 Woodland Road, P.O. Box 1270**
**Hopwell, Virginia 23860 (US)**

(74) Representative : **Gallafent, Richard John et al**
**GALLAFENT & CO. 8 Staple Inn**
**London WCIV 7QH. (GB)**

(54) Melamine grafted fire and drip resistant polyamide thermoplastics.

㊐   A fire retardant graft polymer having resistance to dripping and puddling on exposure to fire and the method of making such graft polymer comprising of from about 10%-35% by weight of melamine and a thermoplastic polyamide. The graft polymer is formed under conditions of controlled incipient depolymerization for the polyamide. The melting point of the polyamide is not reduced more than 30°C during the making of the fire retardant graft polymer. The physical properties of the thermoplastic are not degraded even though a high concentration of melamine is contained in the final graft polymer. An additional organic compound which does not inhibit the formation of the melamine-polyamide graft can also be grafted to the polyamide.

EP 0 457 549 A1

The present invention is directed to a method of grafting melamine on to a polyamide thermoplastic or a graft thermoplastic polymer containing a polyamide as a component thereof under conditions of incipient depolymerization for the polyamide thermoplastic, and to the fire and drip resistant thermoplastics produced thereby, while substantially retaining or improving the physical properties of the polyamide.

The fire retarding properties of s-triazine compounds, including melamine - particularly in the form of a melamine-formaldehyde resin, have been known in the art for a long time and have been used commercially in some products. Melamine is preferred for use as a fire retardant over the commonly used halogenated organics, antimonies, borates and heavy metal compounds since melamine has a lower toxicity than those materials.

The art describes the use of s-triazine compounds as flame proofing agents for polyamide resins. However, where the treatment of polyamide thermoplastics is described in the art, the s-triazine compound is utilized only in a minor amount, is combined with the polyamide by simple blending as opposed to being incorporated into the polyamide structure itself, and/or is required to be utilized with a second flame proofing agent in order to provide satisfactory fire retardant properties to the end product. The art recognizes that when a high concentration of a flame proofing agent is utilized, that the physical properties of the polyamide is detrimentally affected. Where a higher concentration of a fire retardant is utilized, a second compound is generally utilized in conjunction with the first.

The art recognizes shortcomings in utilizing melamine alone as a fire proofing agent for polyamides. Relevant patents in this regard include U.S. Patent Nos. 4,180,496; 4,574,154, and 4,452,931. For example, the '496 patent states that melamine alone is not satisfactory as a fire retardant on the basis that: (1) polyamides are made at a temperature in the range of from 200°C to 300°C and melamine decomposes at these temperatures; (2) melamine sublimes at higher than 220°C and bubbles thereby deteriorating the mechanical properties of the polyamide; and (3) the miscibility of melamine is not as good in polyamides thereby necessitating the pulverization of the melamine.

Patents describing the use of melamine alone as a fire retardant include, for example, U.S. Patent Nos. 3,660,344; 4,789,698, and 4,180,496.

U.S. Patent No. 3,660,344 discloses the use of 0.5%-25% of melamine or a derivative thereof with a polyamide. In making the fire retardant product, the polyamide and melamine are homogeneously mixed in an extruder. No suitable temperature is described for use in mixing or extrusion of the mixture. In the examples set forth, all of the additives are included in an amount below 10%.

U.S. Patent No. 4,789,698 discloses a mixture of polyamide 6 or 66; 3%-25% of melamine, melamine cyanurate or a mixture thereof; and 5%-45% of unsized glass fibers. The mixture is extruded at a temperature of 285°C-290°C. In the examples, 15 parts of melamine are present and the extrusion is carried out at 280°C.

U.S. Patent No. 4,180,496 is directed to the use of an adduct prepared from melamine and cyanuric acid as a fire retardant. Comparative examples set forth in the '496 patent show that the use of melamine alone, cyanuric acid alone or a blend of melamine and cyanuric acid as flame retarding agents are insufficient in comparison to the adduct. The comparative example products were shown to have overall properties not as good as those of the product containing the adduct. In particular, the physical properties of the comparison example resins were reduced with regard to the coloration of the resin or bubbling characteristics of the resin showing that the thermal stability of the resins was less than that of the adduct-containing resin. However, some of the comparative products did have a U.L. 94 rating of V - O.

The prior art additionally discloses the use of various other s-triazine compounds alone as fire retardants for polyamides. For example, U.S. Patent No. 4,363,890 discloses the use of a melamine cyanurate in an amount of 1%-30%. The fire retardant is melt blended with a polyamide at a temperature of 5°C-80°C higher than the melting point of the polyamide. U.S. Patent No. 3,980,616 discloses the use of from 0.5%-20% of cyanuric acid. The cyanuric acid is added to a polyamide after polymerization of the polyamide at a temperature between the softening point of the polyamide and 250°C. U.S. Patent No. 4,085,283 discloses the use of a phosphorous or nitrogen containing compound, such as tris(2-hydroxyethyl)isocyanate or cyanuric acid, in an amount of 5%-50%. The fire retardant can be added to the polyamide by any conventional means such as mixing, coating or as a comonomer during the polymerization process. When the fire retardant is utilized as a comonomer, however, an -OH group must be present in the structure of the comonomer.

Various blends of compounds are disclosed in the art suitable for use as fire retardants, including where one of the compounds of the blend is melamine. Examples include U.S. Patent Nos. 4,321,189; 4,001,177, and 4,341,694. The '189 patent is directed to the blend of melamine and cyanuric acid in an amount of 1%-30% and involves melt blending of the fire retardant blend with a polyamide at a temperature of 5°C-80°C higher than the melting point of the polyamide.

Additional art describing the treatment of polyamide compounds with flame proofing agents include U.S. Patent Nos. 4,298,518; 3,793,289; 4,317,766; 3,843,650, and 3,950,306 which describe the use of a substituted triazine compound or a melamine derivative as a flameproofing agent for polyamide resins. Each of the '518,

'289, and '766 patents disclose that when the specified flameproofing agent is utilized in a higher concentration, that the mechanical properties of the product produced are adversely affected.

The effect of particle size on a fire proofing agent is noted in U.S. Patent No. 4,317,766 which states that the particle size of the fire retardant should be at most 35μ with at least 80% being at most 10μ. The '766 patent describes the use of melamine cyanurate in an amount of 2%-25% as the fire retardant. The melamine cyanurate is added during the polymerization process. However, the patent specifically states that the melamine cyanurate does not react with the polymer components.

Accordingly, the present invention which provides for the incorporation of a high concentration of a non-resinous melamine having a specified particle size into the structure of a polyamide thermoplastic material, or graft thermoplastic polymer containing a polyamide as a component thereof, by grafting the melamine to the polyamide under conditions of incipient depolymerization for the polyamide is not shown in the art. The art, in fact, teaches that the use of an excessive amount of certain triazine or melamine derivative compounds with a polyamide is detrimental to the physical properties of the polyamide.

## OBJECTS OF THE INVENTION

A primary object of the present invention is to provide a method of producing a fire and drip resistant thermoplastic polyamide polymer or graft polymer thereof wherein non-resinous melamine is grafted onto the polyamide thermoplastic under conditions of incipient depolymerization for the polyamide, and the product produced thereby.

A further primary object of the present invention is to provide a method of producing a polyamide thermoplastic material or graft polymer thereof having a non-resinous melamine present as a part of the polymer structure wherein the method involves incorporating from about 10% to 35% of melamine particles having a diameter of 50 microns or less into the polyamide structure under conditions of incipient depolymerization for the polyamide.

A further primary object of the present invention is to provide a method of producing a fire and drip resistant thermoplastic polymer from a thermoplastic polyamide graft polymer and melamine wherein the graft polyamide polymer is formed before or at the same time that the melamine is grafted to the polyamide under conditions of incipient depolymerization for the polyamide.

## BRIEF DESCRIPTION OF THE INVENTION

The drip and fire resistant graft thermoplastic products of the present invention are obtained by admixing a substantial amount of melamine with a polyamide thermoplastic polymer or graft polymer thereof under conditions of incipient depolymerization for the thermoplastic polyamide. The conditions of incipient depolymerization for the polyamide can be provided by thermal means alone or by utilizing a combination of heat and a small amount of a depolymerization catalyst. The melamine is present as particles 50 microns or less in diameter. The particle lengths are approximately the same dimension as the diameter.

The formation of the graft polymer of the present invention is indicated by the homogeneity of the polymer, the inseparability of the admixed melamine from the polymer, the injection molding effectiveness of the graft polymer and the water insolubility of the melamine containing graft polymer.

More particularly, the composition of the graft polymers of the present invention comprises melamine particles in an amount of from 10% to 35% by weight based on the weight of the total mixture used to form the composition, preferably in the range of from 20% to 35% by weight and most preferably in the range of from about 24%-30% by weight, and a polyamide thermoplastic polymer or graft polymer thereof capable of undergoing incipient depolymerization and forming a graft polymer with melamine. Incipient depolymerization is indicated by a reduction in the melting point of the polyamide in an amount of from about 0°C-30°C.

The physical properties of the polyamide can be improved by forming graft compounds using the polyamide and a minor amount of a non-melamine organic material, preferably before forming the melamine-polyamide graft compound. The non-melamine organic material grafted to the polyamide is preferably present in an amount of 5% or less based on the weight of the polyamide. Additionally, the organic compound utilized cannot inhibit the formation of the melamine-polyamide graft. With graft materials whose properties are known, the graft between the non-melamine organic material and polyamide can be made at the same time that the melamine-polyamide graft is formed.

## DESCRIPTION OF THE PRESENTLY PREFERRED EMBODIMENT

The present invention is directed to a fire retardant material resistant to dripping and puddling in fire environments and to a method of making the fire retardant product involving grafting melamine to a polyamide thermoplastic or a graft polymer thereof using a high concentration of melamine without detrimentally affecting the physical properties of the polyamide thermoplastic and in some cases even improving the properties of the polyamide. The physical properties of particular concern are the flexibility, tensile strength and elongation or elasticity of the plastic formed. The degree of fire retardancy and the resistance to dripping and puddling can be varied by varying the amount of melamine which is grafted into the structure of the polyamide thermoplastic material.

The melamine utilized in the present invention is a non-resinous compound, i.e. the material has not been polymerized and is capable of forming a graft polymer with a thermoplastic polymer. Thus, as used herein, non-resinous melamine includes "molecular" melamine wherein "molecular" is understood to refer to those compounds which exist in a substantially chemically unchanged, unreacted and unpolymerized form as crystals, powders, agglomerates or solutions.

When the non-resinous melamine is grafted to a polyamide thermoplastic polymer by the method of the present invention, a fire and drip resistant product is produced which does not puddle in fire environments. The term "drip" is understood to mean the characteristic action of most thermoplastic solids upon their exposure to the high temperature conditions present with fire. Generally, solid thermoplastic materials melt and form low viscosity liquids which flow or drip in a fire environment. "Puddle" refers to another characteristic action, which is related to drip, of most thermoplastic solids when exposed to fire. "Puddling" occurs when solid thermoplastics melt to form low viscosity liquids which run or drip to form puddles of thin liquid resin. This liquid resin becomes separated from any fire retarding solid(s) which may have been originally blended with the thermoplastic. Puddling and dripping substantially reduce or eliminate the beneficial effects of most solid fire retardants present in or with the thermoplastic and can actually spread a fire to new fuels or areas.

Thermoplastics which are suitable for use in the present invention include polyamides derived from the polycondensation of a linear dicarboxylic acid and a linear diamine. Some minor branching of the linear chains is acceptable. Additional suitable polyamides are resins produced by the polymerization of a lactam having a ring with more than 3 members, or a polymer of an α-amino acid. Preferred polyamides are nylons such as nylon-6, i.e. the polycondensation product of ∈-caprolactam; and nylon-66, i.e. the polycondensation product of adipic acid and hexamethylene diamine; and amino caproic acid. The thermoplastic polyamides suitable for use in the present invention must be capable of undergoing incipient depolymerization and of forming a graft with melamine. Incipient depolymerization is described further below. "Thermoplastics" is used herein as is conventional to describe polymers which increase in plasticity upon increases in temperature. When the temperature has become sufficiently high, the thermoplastic material becomes fluid. The plasticity of the thermoplastic decreases as the temperature decreases until the material returns to its original physical properties. There is, therefore, no substantial cross-linking.

The graft polymer of the present invention, therefore, is comprised of a main polyamide backbone chain to which side chains containing the melamine constituents are attached at various sites. The formation of a graft polymer alters the properties of the original main chain polymer and of the side chain additives. The properties of the new material, i.e. the graft polymer, are thus different from those of the starting polymer. In order to form the graft polymer of this invention, the main backbone polymer chain of a base polymer is activated by thermal means, preferably in the absence of air, or catalytically. Suitable catalysts are substances which notably affect the rate of chemical reaction without being consumed or otherwise undergoing a chemical change by the reaction. A fractional amount of a catalyst can accelerate dramatically the rate of reaction. In the present invention, a catalyst can be utilized to initiate depolymerization of the thermoplastic material. The function of the depolymerization in the reaction will be described further below.

Resinous or polymeric melamine materials, such as melamine-formaldehyde resin, are not suitable for use in the present invention. These materials produce undesirable properties since they do not form an effective graft with thermoplastic materials, and accordingly, degrade the physical properties of the thermoplastic. Molecular melamine is effective in the method of the present invention since it is capable of forming grafts with a polyamide thermoplastic material while maintaining or improving the physical properties of the thermoplastic and providing the maximum fire retarding effects of the melamine to the thermoplastic polyamide component.

The graft polymers produced using the method of the present invention are rendered fire retardant and drip and puddle resistant by three different possible means, namely intumescence, cooling during high temperature decomposition and exclusion of air from the fuel. First, when the graft polymer of the invention is exposed to the high temperatures of fire, the graft polymer intumesces. That is, a crusty foam forms on its surface which serves to insulate the remainder of the fuel from the heat of the fire. Secondly, when the graft polymer is exposed to temperatures of 300°C or higher, the polymer endothermically decomposes providing cooling to the area exposed to fire thereby cooling available fuel to temperatures below the fuel's ignition point. Thirdly, the presence of the non-flammable thermoplastic grafts or its intumescent products, serve to effectively exclude air from incidental fuel present in the area or from the thermoplastic itself which would be flammable were it to become separated from the contained melamine component.

Melamine is economically advantageous due to its ready availability and low cost. Melamine functions well in forming graft polymers with polyamide thermoplastics and as a fire retardant based on a minimum weight of the melamine component being added to the thermoplastic.

The graft polymers of the present invention can be prepared from dry melamine solid particles having a particle size of 50 microns or less in diameter. The particle lengths are approximately the same dimension as the diameter so that the particles are compact in shape. Long shaped particles make the molten polyamide-melamine mixtures difficult to work due to the high viscosity encountered when an appreciable amount of melamine is used. Finely divided melamine, i.e. melamine having diameters of from about 1-10 microns, are preferred since they provide a high melamine surface area for reaction with the polyamide. The optimum particle size is approximately 5 microns in diameter. These particle sizes result in the formation of strong grafts between the melamine and polyamide which do not reduce the tensile strength, elasticity or flexibility of the plastic. As the particle size is increased upward to 50 microns, the above physical properties are decreased but remain satisfactory for most commercial uses of non-burning polyamide compositions. However, when the melamine particle size is increased beyond 50 microns, while satisfactory tensile strength of the polyamide is substantially maintained, an appreciable reduction in the properties of flexibility and elasticity occurs thereby rendering the polyamide unsuitable for most commercial uses of non-burning polyamides.

The grafts of the present invention, as hereinbefore stated, are effectively prepared only when the melamine component and the thermoplastic polyamide are mixed and held under conditions of incipient depolymerization for the polyamide. Incipient depolymerization is the point at which depolymerization of the thermoplastic is just starting. The incipient depolymerization can be created by heat, a catalyst or a combination of heat and a catalyst. The molecular weight of the polyamide and its melting point are not to be reduced significantly under the conditions of incipient depolymerization. The reduction in the melting point should be in a range of from no more than about 0°C to 30°C. Larger melting point reductions indicate the occurrence of more depolymerization than is required for the formation of satisfactory grafts in the present invention and will lead to degradation of polymer properties and the usefulness of the thermoplastics.

Thus, under the conditions of incipient depolymerization, the reduction of the melting point of the polyamide commences. This reduction is influenced by the presence of small amounts of newly formed oligomer and monomer. It has been found that incipient depolymerization is obtained and fire retardant thermoplastics having good resistance to puddling and dripping are obtained when the melting point of the thermoplastic is preferably not reduced more than from about 0°C and 10°C, most preferably between 0°C and 5°C, and optimally from between 1°C and 3°C.

Under incipient depolymerization conditions, the bonds which hold the thermoplastic polyamide together become loose thereby allowing the melamine component to form short side chain additions to the main backbone polymer chain. The incipient depolymerization conditions are maintained for a time sufficient to allow for the melamine graft to form. Under the conditions described herein, the retention or hold time of the reactants under conditions of incipient depolymerization is generally from about 10-200 seconds and preferably from 20-60 seconds. The time required will be decreased by the severity of the depolymerization conditions imposed.

The graft between melamine and the polyamide thermoplastics are formed in a temperature range above the melting point of the thermoplastic and below the melting point of the melamine compound and is generally most effectively formed in the range of from about 210°C-280°C. The preferred range is between 230°C and 240°C. Since the polyamides, such as nylon, are high melting thermoplastics, i.e. above 200°C, if the invention is to be operated in a commercially feasible manner, the temperature most preferred is in the upper end of the temperature range described above.

During the grafting stage, a depolymerization catalyst can be advantageously used to decrease the hold time for the formation of the grafts and to decrease the temperature at which the incipient depolymerization of the thermoplastic occurs. Depolymerization catalysts suitable for use in the present invention include phosphoric acid, pyrophosphoric acid, phosphorus pentoxide, sulfuric acid, and ammonium sulfate. Only a small amount of the catalyst is required, i.e. from about 0.01% to 0.1%. The presence of an excessive amount of catalyst has been found to quickly depolymerize the thermoplastic polyamide resulting in a reduction of its molecular weight to a point where the physical properties of the thermoplastic were impaired. Frequently, sufficient catalyst remains present in the thermoplastic polyamide from the formation of the polyamide polymer in order to catalyze the incipient depolymerization at temperatures just above their melting point so that the graft polymer can be expeditiously formed at atmospheric pressure without the need to utilize an additional catalyst.

The amount of melamine combined with the thermoplastic polyamide to form the graft polymer must be substantial in order to achieve the desired fire retardancy and reduction in puddling and dripping properties. In methods known in the art, however, substantial amounts of the fire retardant serve to degrade or deteriorate the mechanical properties of the thermoplastic thereby rendering them unsuitable for their desired uses. Due to the method of the present invention, from about 10% to 35% by weight, based on the total weight of the polyamide polymer and melamine, can be used resulting in the formation of a fire retardant graft polymer which is highly resistant to dripping and puddling without degradation of the polymer properties, in particular the properties of tensile strength, elasticity and flexibility. The preferred range of melamine is from about 20% to 35%, with the most preferred range being from about 24% to 30%. It has been found that melamine concentrations above 35%, however, serve to undesirably lessen the elasticity and flexibility of the polyamide thermoplastics by making the polymer brittle and difficult to injection mold because the viscosity of the composition is high resulting in sticking and buildups on the processing machinery even at high temperatures.

The mechanism by which the formed graft polymer remains together and resists puddling and dripping in the environment of fire is not presently completely understood. However, it is speculated that the physical structure of the graft polymer remains stable at elevated temperatures and, therefore, the low viscosity liquids which could form puddles and cause separation of the thermoplastic from the fire retardant does not occur, contrary to the results obtained with blends of thermoplastic polymer and melamine as previously known in the art.

The method of preparing the product of the present invention can be carried out using conventional equipment of the thermoplastic industry. A stepwise description of the preferred method of the present invention is as follows:

(1) heating the thermoplastic polyamide, which is capable of forming graft polymers with melamine, at a temperature above the polyamide's melting point until the polyamide undergoes incipient depolymerization; (2) admixing melamine with the thermoplastic polyamide when incipient depolymerization occurs and holding the mixture under these conditions until a graft polymer is formed between the melamine and the thermoplastic polyamide; and (3) cooling the graft polymer to prevent further depolymerization. Alternatively, the thermoplastic and melamine can be premixed prior to heating to the point of incipient depolymerization so long as the thermoplastic is subjected to the necessary conditions. The thermoplastic polyamide and melamine are preferably mixed in the form of a powder, granulates or pellets. Specifically, the polymer is normally used as pellets or molding powders which are dry blended with melamine of a particular particle size. A depolymerization catalyst or catalysts are added, if used, to the mixture. The thermoplastic graft polymer after the grafting has occurred is cooled by extruding the mixture into a turbulent cooling medium where it solidifies as pellets or chips. The pellets or chips are then dried by any conventional means and are suitable for use in injection molding or other uses which require fire retardant thermoplastics.

In a modification to the preferred embodiment, the polyamides utilized can also be grafted to a non-melamine organic compound which does not inhibit the formation of the requisite melamine-polyamide graft and which preferably enhances the physical properties of the polyamide resin.

The graft of a non-melamine organic compound to the polyamide is preferably performed prior to the melamine-polyamide graft so as to allow for a pre-melamine graft determination of the polyamide properties. However, if the materials and properties of the graft are well known, the organic-polyamide graft can be formed at the same time the melamine-polyamide graft is formed.

The non-melamine organic compound grafted to the polyamide is present only in a minor amount, i.e. from about 5% or less by weight based on the weight of the polyamide, and preferably from about 0.25% to 1.0% by weight.

Organic grafting compounds effective in providing improved elasticity and flexibility to the melamine-polyamide graft while not reducing their tensile strength include dicarboxylic acids, their anhydrides, and their derivatives, such as for example maleic acid, maleic anhydride, terephthalic acid, and dimethyl terephthalate.

Additionally, other additives as conventionally known can be introduced into the final product after the melamine-polyamide graft is formed to affect the final properties of the graft composition. Such additives include fibrous materials, such as fiberglass, and oxidation inhibitors.

## Example 1

Example 1 demonstrates the method of preparing the non-burning polyamide-melamine graft composition of the present invention.

Seventy-six (76) parts by weight of a thermoplastic polyamide in the form of polycondensed ε-caprolactam, i.e. nylon 6, was dry blended in the form of pellets with 24 parts by weight of fine melamine powder. The nylon 6 had a relative viscosity of 2.3 as determined in a solution of 1 gram of nylon 6 in 100 ml of 98% sulfuric acid measured in a Ubbelohde Viscometer at 25°C. The particle size distribution of the melamine powder was as follows:

| Particle Diameter, microns | Wt. % |
|---|---|
| <1 | 4 |
| 1 - 5 | 81 |
| 5 - 20 | 9 |
| >20 | 6 |

The dry melamine powder and nylon 6 pellets having a median diameter of about 3 mm were batch blended at ambient temperature in a double cone Patterson-Kelly Blender for 10 minutes. The blended nylon 6 and melamine powder, amounting to 250 pounds, was then charged to a feed hopper for continuous feed to a mixer-reactor.

The mixer-reactor utilized was a ZSK Twin-Screw Machine produced by Werner and Pfleiderer Corporation. It was equipped with co-rotating screws. The screws were self-wiping and provided positive conveyance of the polyamide-melamine mixtures. The residence time was controlled by the speed of the variable-speed screws. The temperature of the mixture was controlled with heaters located in the barrel surrounding the twin screws. The length to diameter ratio of the ZSK Machine was 24:1.

In the ZSK Machine, the nylon 6 was heated along with the melamine, melted, and brought to the temperature of incipient depolymerization. Incipient depolymerization was reached for the nylon 6 by bringing the temperature of the melted material to 240°C and operating with a 43 second holdup time. A 6°C decrease in the melting point of the nylon 6 was observed. Under these conditions, the reaction of the melamine with the nylon 6 was carried out and the polyamide-melamine graft was formed.

The graft product was discharged from the ZSK Machine as a continuous fluid extrusion which was immediately chopped into small pieces and quenched by turbulent cooling water to form solid pellets. The pellets were dried at 88°C for 12 hours under a vacuum. Some of the pellets were injection molded into test specimens for fire and physical evaluation tests. The specimens were sized into 5″ x 1/2″ pieces having thicknesses of 1/16″, 1/8″, and 1/4″.

## Example 2

This example demonstrates that the product of Example 1 is non-burning. The product of Example 1 was compared with untreated nylon 6 using Underwriters Laboratory Test Method 94. Underwriters Laboratory (U.L.) Test Method 94 determines the distance a test piece of plastic burns before it self-extinguishes as described in U.L. literature. A rating of V-O indicates that the test piece burned for no appreciable time or distance after the test piece was removed from a fire source. The results are as follows:

| Test Material | UL-94 Test Result |
|---|---|
| Example 1 Product | V-O |
| Untreated Nylon 6 | V-2 |

## Example 3

This example demonstrates that the non-burning product of Example 1 has substantially the same tensile strength, flexibility and elasticity as the original polyamide utilized in making the product and that these properties are much superior to those present in a product obtained by rapid blending of the same ingredients without formation of the melamine-polyamide grafts. These properties were evaluated according to ASTM Method D-638-56T of Tensile Strength, Elongation, and Flex Modulus. The results are as follows:

| Materials | Tensile Strength lbs/in$^2$ | Elongation % | Flex Modulus X 10$^5$ |
|---|---|---|---|
| Example 1 Product | 11420 | 24 | 4.8 |
| Untreated Nylon 6 | 11494 | 32 | 4.1 |
| Untreated Nylon 6 + 24% Unreacted Melamine | 5810 | 2 | 6.5 |

The tensile strength of the Example 1 product was the same as that of the original nylon 6 even though the product of Example 1 contained 24% melamine. The elongation was reduced only from 32% to 24% while the elongation at break was reduced 16 fold when regular melamine powder was merely blended with nylon 6 at the lowest temperature and time possible, ie. 213°C for 15 seconds. This blended material also gave a poor Flex Modulus of 6.5 compared to 4.8 for the Example 1 product and 4.1 for the untreated nylon 6.

Example 4

This example demonstrates the resistance to puddling and dripping of the product of the present invention under conditions of fire environments. The product of Example 1 was injection molded into a circular disk 1-3/4" in a diameter and 1/8" thick. This disk was placed on a dry pine board which was 2" wide, 1/2" thick, 8" long and positioned at a 30° angle to a steel supporting base. The pine board was ignited with a torch and the board allowed to burn completely after removing the torch. Ashes and charred wood was all that remained of the pine board. The disk of the Example 1 product did not burn, puddle or drip from the board. The disk remained in place on the board and the section of board beneath the disk was largely unburned. The disk was discolored but never caught fire and burned.

Example 5

This example demonstrates that the physical properties of the thermoplastic melamine-polyamide grafts can be safely altered and improved still further by employing polyamides which have been grafted with minor amounts of non-melamine organic compounds. In this example the nylon 6 used in Example 1 was grafted with 0.5% by weight of maleic anhydride prior to the polyamide's use in preparing the melamine-polyamide graft. The maleic anhydride graft reduced the melting point of the nylon, increased the nylon's process fluidity, and increased the flexibility of the final product. The product of this example was prepared under the conditions of Example 1 using the same processing equipment. The results of the comparative evaluations are as follows:

| Materials | UL-94 Rating | Elongation % | Flex Modulus X 10$^5$ |
|---|---|---|---|
| Example 5 Product | V-O | 28 | 4.3 |
| Nylon 6 | V-2 | 32 | 4.1 |

Example 6

This example shows the effect on the mechanical properties of nylon 66 having from 10% to 33% of melamine grafted thereto in accordance with the process of the present invention as described above.

This example also illustrates the difference present in the products upon the use of ultrafine (1-5 microns) or superfine (about 5 microns) particles of melamine in the properties of tensile strength, flexural strength and flexural modulus. The results show that the values of each of these properties was superior in the product made using superfine melamine. The tensile strength was substantially unchanged, but the flexural strength was increased by more than a factor of two and the flexural modulus increased by more than 25%.

8

### Nylon 66/Melamine

| A. Ultrafine Melamine | 0% | 10% | 20% | 28% | 33% |
|---|---|---|---|---|---|
| Tensile Strength, psi | 10800 | 6600 | 5300 | 6200 | 3410 |
| Elongation, % | 20 | 10 | 15 | 13 | 10 |
| Flexural Strength, psi | 14000 | 10560 | 10630 | 9270 | 7190 |
| Flexural Modulus x $10^5$, psi | 3.5 | 3.37 | 3.81 | 3.89 | 2.99 |
| Notched Izod, ft. lb./in. | 1.1 | 0.70 | 0.76 | 0.71 | 0.60 |

| B. Superfine Melamine | 0% | 10% | 20% | 28% | 33% |
|---|---|---|---|---|---|
| Tensile Strength, psi | 10800 | 8440 | 10280 | 11420 | 7290 |
| Elongation, % | 20 | 19 | 18 | 18 | 12 |
| Flexural Strength, psi | 14000 | 14830 | 14370 | 15430 | 13200 |
| Flexural Modulus x $10^5$, psi | 3.5 | 4.87 | 5.32 | 5.45 | 5.44 |
| Vicat Temp., °C | 235 | 220 | 225 | 232 | 230 |
| Notched Izod, ft. lb./in. | 1.1 | 0.60 | 0.70 | 0.66 | 0.65 |

Example 7

This example illustrates the non-burning nature of a nylon 66/melamine graft compound made in accordance with the present invention. Nylon 66 having from 10% to 33% melamine grafted thereto all pass U.L. 94 as V - O. As a comparison, polypropylene having from 15% to 45% melamine grafted there-to made by the same method as the nylon 66/melamine compound were tested. None of the polypropylene compounds passed the U.L. 94 test as V - O rated. The polypropylene product containing 45% melamine did not burn on the first application of flame, but burned for a considerable time on the second application of flame. Each sample tested was 1/16 of an inch in thickness.

### I. Sample: Nylon 66 + 10% Melamine

| Specimen | Burning Time Seconds First Application | Burning Time Seconds Second Application | Afterglow Seconds | Specimen Conditioning |
|---|---|---|---|---|
| 1 | 0 | 0 | 0 | 73°F/50% R.H. |
| 2 | 0 | 0 | 0 | 73°F/50% R.H. |
| 3 | 0 | 0 | 0 | 73°F/50% R.H. |
| 4 | 5 | 0 | 0 | 73°F/50% R.H. |
| 5 | 0 | 0 | 0 | 73°F/50% R.H. |
| 6 | 6 | 2 | 0 | Oven Aged |
| 7 | 2 | 0 | 0 | Oven Aged |
| 8 | 2 | 0 | 0 | Oven Aged |
| 9 | 2 | 0 | 0 | Oven Aged |
| 10 | 2 | 0 | 0 | Oven Aged |

Observations: Charring, melting.
Classification: This material is classified U.L. 94 V-O.

II. Sample: Nylon 66 + 20% Melamine

| Specimen | Burning Time Seconds First Application | Burning Time Seconds Second Application | Afterglow Seconds | Specimen Conditioning |
|---|---|---|---|---|
| 1 | 0 | 0 | 0 | 73°F/50% R.H. |
| 2 | 0 | 0 | 0 | 73°F/50% R.H. |
| 3 | 0 | 0 | 0 | 73°F/50% R.H. |
| 4 | 0 | 0 | 0 | 73°F/50% R.H. |
| 5 | 0 | 0 | 0 | 73°F/50% R.H. |
| 6 | 0 | 0 | 0 | Oven Aged |
| 7 | 0 | 0 | 0 | Oven Aged |
| 8 | 0 | 0 | 0 | Oven Aged |
| 9 | 0 | 0 | 0 | Oven Aged |
| 10 | 0 | 0 | 0 | Oven Aged |

Observations:     Charring, melting.
Classification:   This material is classified U.L. 94 V-O.

III. Sample: Nylon 66 + 28% Melamine

| Specimen | Burning Time Seconds First Application | Burning Time Seconds Second Application | Afterglow Seconds | Specimen Conditioning |
|---|---|---|---|---|
| 1 | 0 | 0 | 0 | 73°F/50% R.H. |
| 2 | 0 | 0 | 0 | 73°F/50% R.H. |
| 3 | 0 | 0 | 0 | 73°F/50% R.H. |
| 4 | 0 | 0 | 0 | 73°F/50% R.H. |
| 5 | 0 | 3 | 0 | 73°F/50% R.H. |
| 6 | 0 | 0 | 0 | Oven Aged |
| 7 | 0 | 0 | 0 | Oven Aged |
| 8 | 0 | 0 | 0 | Oven Aged |
| 9 | 0 | 0 | 0 | Oven Aged |
| 10 | 0 | 3 | 0 | Oven Aged |

Observations:     Charring, melting.
Classification:   This material is classified U.L. 94 V-O.

IV.   Sample:   Nylon 66 + 33% Melamine

| Specimen | Burning Time Seconds First Application | Burning Time Seconds Second Application | Afterglow Seconds | Specimen Conditioning |
|---|---|---|---|---|
| 1 | 0 | 0 | 0 | 73°F/50% R.H. |
| 2 | 0 | 0 | 0 | 73°F/50% R.H. |
| 3 | 0 | 0 | 0 | 73°F/50% R.H. |
| 4 | 0 | 0 | 0 | 73°F/50% R.H. |
| 5 | 0 | 0 | 0 | 73°F/50% R.H. |
| 6 | 0 | 0 | 0 | Oven Aged |
| 7 | 0 | 0 | 0 | Oven Aged |
| 8 | 0 | 0 | 0 | Oven Aged |
| 9 | 0 | 0 | 0 | Oven Aged |
| 10 | 0 | 0 | 0 | Oven Aged |

Observations:  Charring, melting.
Classification:  This material is classified U.L. 94 V-O.

V.   Sample:   Polypropylene + 15% Melamine

| Specimen | Burning Time Seconds First Application | Burning Time Seconds Second Application | Afterglow Seconds | Specimen Conditioning |
|---|---|---|---|---|
| 1 | 83 | * | 0 | 73°F/50% R.H. |
| 2 | 91 | * | 0 | 73°F/50% R.H. |
| 3 | 85 | * | 0 | 73°F/50% R.H. |
| 4 | 0 | 74 | 0 | 73°F/50% R.H. |
| 5 | 78 | * | 0 | 73°F/50% R.H. |
| 6 | 85 | * | 0 | Oven Aged |
| 7 | 70 | * | 0 | Oven Aged |
| 8 | 78 | * | 0 | Oven Aged |
| 9 | 70 | * | 0 | Oven Aged |
| 10 | 73 | * | 0 | Oven Aged |

Observations:  Charring, melting, drippings, flaming drip-
pings which ignited the cotton (all specimens).

* Specimens burned to the holding clamp within the
first flame application.  All specimens burned to the
holding clamp.

Classification:  This material could not be classified under
U.L. 94 as a V rating.

VI.  Sample:  Polypropylene + 25% Melamine

| Specimen | Burning Time Seconds First Application | Burning Time Seconds Second Application | Afterglow Seconds | Specimen Conditioning |
|---|---|---|---|---|
| 1 | 12 | 60 | 0 | 73°F/50% R.H. |
| 2 | 87 | * | 0 | 73°F/50% R.H. |
| 3 | 77 | * | 0 | 73°F/50% R.H. |
| 4 | 97 | * | 0 | 73°F/50% R.H. |
| 5 | 83 | * | 0 | 73°F/50% R.H. |
| 6 | 86 | * | 0 | Oven Aged |
| 7 | 82 | * | 0 | Oven Aged |
| 8 | 87 | * | 0 | Oven Aged |
| 9 | 83 | * | 0 | Oven Aged |
| 10 | 105 | * | 0 | Oven Aged |

Observations:  Charring, melting, drippings, flaming drippings which ignited the cotton (all specimens).

* The specimens burned to the holding clamp after the first 10-second flame application.  All specimens burned to the holding clamp.

Classification:  This material could not be classified under U.L. 94 as a V rating.

VII. Sample: Polypropylene + 30% Melamine

| Specimen | Burning Time Seconds First Application | Burning Time Seconds Second Application | Afterglow Seconds | Specimen Conditioning |
|---|---|---|---|---|
| 1 | 104 | * | 0 | 73°F/50% R.H. |
| 2 | 88 | * | 0 | 73°F/50% R.H. |
| 3 | 0 | 74 | 0 | 73°F/50% R.H. |
| 4 | 0 | 85 | 0 | 73°F/50% R.H. |
| 5 | 89 | * | 0 | 73°F/50% R.H. |
| 6 | 91 | * | 0 | Oven Aged |
| 7 | 10 | 102 | 0 | Oven Aged |
| 8 | 9 | 71 | 0 | Oven Aged |
| 9 | 0 | 93 | 0 | Oven Aged |
| 10 | 96 | * | 0 | Oven Aged |

Observations: Charring, melting, drippings, flaming drippings which ignited the cotton (all specimens).

* Specimens burned to the holding clamp after the first flame application. All specimens burned to the holding clamp.

Classification: This material could not be classified under U.L. 94 as a V rating.

EP 0 457 549 A1

## VIII. Sample: Polypropylene + 45% Melamine

| Specimen | Burning Time Seconds First Application | Burning Time Seconds Second Application | Afterglow Seconds | Specimen Conditioning |
|---|---|---|---|---|
| 1 | 0 | 78 | 0 | 73°F/50% R.H. |
| 2 | 0 | 30 | 0 | 73°F/50% R.H. |
| 3 | 2 | 27 | 0 | 73°F/50% R.H. |
| 4 | 0 | 88 | 0 | 73°F/50% R.H. |
| 5 | 0 | 0 | 0 | 73°F/50% R.H. |
| 6 | 0 | 27 | 0 | Oven Aged |
| 7 | 0 | 46 | 0 | Oven Aged |
| 8 | 0 | 5 | 0 | Oven Aged |
| 9 | 0 | 2 | 0 | Oven Aged |
| 10 | 0 | 41 | 0 | Oven Aged |

Observations: Charring, melting, drippings, flaming drippings which ignited the cotton (Spec.#1,2,3,4,6,7,10).

Specimens #1 & 4 burned to the holding clamp.

Classification: This material could not be classified under U.L. 94 as a V rating.

The composition and method of the present invention are useful in injection molding, slab plastic boards, and generally for engineering plastics. The products formed from the composition of the invention can be used in the manufacture of microwave ovens, television and radio cabinets, air ducts in heating and cooling operations, furniture, construction and building members, engineering plastics and other conventionally known uses for non-burning thermoplastic compositions.

As will be apparent to one skilled in the art, various modifications can be made within the scope of the aforesaid description. Such modifications being within the ability of one skilled in the art form a part of the present invention and are embraced by the appended claims.

## Claims

1. A method of making a fire retardant graft polymer resistant to dripping and puddling when exposed to fire comprising admixing from 90% to 65% by weight of a polyamide thermoplastic material capable of forming a graft polymer with melamine and undergoing incipient depolymerization with from about 10% to 35% by weight, based on the weight of the total mixture, melamine having a particle size of 50 microns or less in diameter; subjecting the polyamide prior to admixing or after admixing to controlled incipient depolymerization to form a graft polymer of melamine and the polyamide; and cooling the graft polymer to prevent further depolymerization.

2. A method according to Claim 1 wherein the incipient depolymerization is carried out at a temperature in the range of from about 210°C to 280°C.

3. A method according to Claim 1 or 2 wherein the polyamide is a polycondensation product of a linear dicarboxylic acid and a linear diamine, a polymer of a lactam having a ring with more than three members, or an α-amino acid polymer.

4. A method according to Claim 1 or 2 wherein the polyamide is a nylon compound.

14

5. A method according to any one of Claims 1 to 4 wherein a non-melamine organic compound which does not inhibit the formation of the graft polymer of melamine and the polyamide is also grafted to the polyamide.

6. A method according to Claim 5 wherein the non-melamine organic compound is a dicarboxylic acid, an anhydride of a dicarboxylic acid, or a derivative thereof.

7. A method according to any one of Claims 1 to 6 wherein the polyamide is in the form of a powder, granulate or pellet.

8. A method according to any one of Claims 1 to 6 wherein the melting point of the polyamide is not reduced more than 30°C during making the fire retardant product.

9. A fire retardant graft polymer resistant to dripping and puddling when exposed to fire comprising from about 10%-35% by weight, based on the weight of the total mixture, of melamine having a particle size of 50 microns or less in diameter and from about 65%-90% by weight, based on the weight of the total mixture, of a polyamide thermoplastic material, wherein the graft polymer is formed from melamine and the polyamide under conditions of controlled incipient depolymerization for the polyamide.

10. A fire retardant product according to Claim 9 wherein the controlled incipient depolymerization occurs at a temperature in the range of from about 210°C to 280°C.

11. A fire retardant product according to Claim 9 or 10 wherein the polyamide is a polycondensation product of a linear dicarboxylic acid and a linear diamine, a polymer of a lactam having a ring with more than three members, or an $\alpha$-amino acid polymer.

12. A fire retardant product according to Claim 9 or 10 wherein the polyamide is a nylon compound.

13. A fire retardant product according to any one of Claims 9 to 12 wherein the melting point of the polyamide is not reduced more than 30°C during formation of the graft polymer under conditions of incipient depolymerization.

14. A fire retardant product according to any one of Claims 9 to 13 wherein a non-melamine organic compound which does not inhibit the formation of the graft polymer of melamine and the polyamide is also grafted to the polyamide.

15. A fire retardant product according to Claim 14 wherein the non-melamine organic compound is a dicarboxylic acid, an anhydride of a dicarboxylic acid, or a derivative thereof.

**European Patent Office**

# EUROPEAN SEARCH REPORT

Application Number

EP    91 30 4316

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 100, no. 26, 25 June 1984 Columbus, Ohio, USA Marek et al.: "MODIFIED MELAMINE-FORMALDEHYDE COMPOSITION" page 38; column 2; ref. no. 210989P * abstract * | 1, 3, 4 | C08K5/3492 C08L77/00 C08F267/10 |
| A | EP-A-348759 (BAYER AKTIENGESELLSCHAFT) * claims 1, 2 * | 1-15 | |
| A,D | EP-A-17925 (TORAY INDUSTRIES,INC.) * claims 1-11 * | 1-15 | |

TECHNICAL FIELDS SEARCHED (Int. Cl.5)

C08K
C08F

The present search report has been drawn up for all claims

| Place of search | Date of completion of the search | Examiner |
|---|---|---|
| THE HAGUE | 12 AUGUST 1991 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)